# DEMANDE DE BREVET EUROPEEN

(11) **EP 4 113 796 A1**
(43) Date de publication de la demande: **04.01.2023**
(21) Numéro de dépôt: 22182274.5
(22) Date de dépôt: 30.06.2022
(51) Int. Cl.: H02K 1/2781, H02K 29/03

(54) **MACHINE ELECTRIQUE TOURNANTE**

(30) Priorité: 02.07.2021 FR 2107191
(71) Demandeur: Moteurs Leroy-Somer, 16915 Angouleme Cedex 9 (FR)
(72) Inventeur: BOMMÉ, Edouard, 69007 LYON (FR); ZHANG, Jian, 69360 SOLAIZE (FR); FRIJLINK, Hanako, 69360 Saint-Symphorien-d'Ozon (FR); GHERAIRI, Haikel, 69320 Feyzin (FR)
(74) Mandataire: Nony

(57) **Abrégé**

Machine électrique tournante (1) comportant :
- un stator (10), et
- un rotor (20) comportant une masse rotorique (25) et des aimants permanents (22) disposés en surface de la masse rotorique, les aimants permanents (22) comportant une face dirigée vers le stator de forme générale concave,
les aimants permanents (22) du rotor formant des pôles du rotor, le ou les aimants permanents (22) d'un même pôle ayant un décalage angulaire (a) entre deux extrémités longitudinales de la machine.

## Description

### Domaine technique

La présente invention concerne le domaine des machines électriques tournantes, et plus particulièrement mais non exclusivement celles utilisées pour la motorisation de robots.

### Technique antérieure

La demande EP 1 793 482 porte sur une machine électrique tournante à ondulation de couple réduite en charge, qui est destinée à l'entraînement de cabines d'ascenseurs, et comporte un rotor extérieur ayant des faces sensiblement planes dirigées vers le stator.

On connaît également des machines électriques tournantes à rotor extérieur, dans lesquelles les aimants permanents du rotor extérieur ont une face principale dirigée vers le stator, de forme cylindrique de révolution.

Dans le cas d'un rotor intérieur, la face principale d'un aimant dirigée vers le stator est généralement de forme convexe.

Dans la demande de brevet FR 3 067 880, les aimants permanents comportent une face concave comportant une portion concave. Dans cette demande, les aimants sont droits.

Dans le brevet US 6 727 630, la surface des aimants du rotor extérieur peut être concave, étant courbée du fait de la mise en place des aimants sur un rotor extérieur.

Dans le brevet US 6 727 629, on enseigne de réduire le crantage en utilisant des aimants permanents disposés en anneaux, les aimants permanents d'anneaux adjacents pouvant être décalés les uns par rapport aux autres dans la direction axiale. En outre, le rotor est extérieur et ne comporte pas d'aimants concaves. Enfin, le stator comporte des segments qui peuvent être décalés.

En particulier dans le domaine de la motorisation des robots, il peut être nécessaire de réduire encore le crantage magnétique d'une machine électrique tournante, notamment par exemple pour un moteur à aimants permanents piloté par un variateur de fréquence. Le crantage magnétique est aussi appelé couple de détente (« *cogging* » en anglais), et correspond à une ondulation de couple à vide ou à très faible charge.

Il existe donc un besoin, en particulier dans le domaine de la motorisation des robots, pour disposer de machines électriques tournante à faible ondulation de couple à vide ou sous très faible charge.

### Résumé de l'invention

L'invention vise à répondre à tout ou partie de ce besoin et a pour objet, selon l'un de ses aspects, une machine électrique tournante comportant :
- un stator, et
- un rotor comportant une masse rotorique et des aimants permanents disposés en surface de la masse rotorique,
   les aimants permanents comportant une face dirigée vers le stator de forme générale concave, une face concave d'un aimant permanent du rotor comportant notamment une portion concave,
   les aimants permanents du rotor formant des pôles du rotor, le ou les aimants permanents d'un même pôle ayant un décalage angulaire entre deux extrémités longitudinales de la machine.

Le rotor selon l'invention permet d'avoir un très faible niveau de crantage magnétique sans pour autant dégrader les performances globales de la machine, notamment les performances électromagnétiques, la force électromotrice, et le couple, entre autres.

On peut ainsi chercher à minimiser les ondulations de couples tout en obtenant un couple pointe minimum à atteindre, pour un entrefer mécanique préfixé.

En outre, le rotor a une meilleure capacité à résister à la désaimantation.

La présence d'une face de forme générale concave dirigée vers le stator pour les aimants permanents du rotor permet d'optimiser les ondulations de couple à vide ou sous très faible charge.

En particulier, la concavité des aimants permanents permet de diminuer le crantage et plus particulièrement les harmoniques de faible fréquence, par exemple les harmoniques 16 et 18.

En outre, le décalage angulaire permet de réduire notamment les harmoniques de haute fréquence.

Enfin, le décalage angulaire permet en particulier de supprimer des harmoniques du crantage magnétique que l'utilisation d'aimants à concavité pourrait avoir tendance à augmenter.

Le décalage angulaire étant faible, les performances électromagnétiques du moteur, notamment la force électromotrice, le couple, la puissance, sont très peu altérées.

Ainsi, on comprend qu'il existe un effet de renforcement à combiner la concavité des aimants permanents avec le décalage angulaire.

### Exposé de l'invention

### Rotor

Par « face de forme générale concave », on entend que la face des aimants permanents du rotor dirigée vers le stator présente une courbure lui conférant une surface en creux. La face peut être entièrement concave, ou comporter une ou des portions concaves et une ou des portions planes.

La présence de portions planes peut permettre de mieux éviter les interférences entre le rotor et le stator.

La masse rotorique peut comporter une douille sur laquelle sont fixés les aimants permanents, notamment par collage.

La douille peut être formée d'un empilement de tôles. La douille peut être unique, portant tous les aimants permanents du rotor. En variante, la masse rotorique peut comporter plusieurs douilles, par exemple autant que de rangées circonférentielles d'aimants permanents.

La ou les douilles peuvent être fixées, par exemple par collage, à un arbre de la machine. L'arbre peut être lisse.

Dans un mode de réalisation, chaque pôle peut comporter au moins un aimant permanent vrillé. Chaque pôle peut comporter un unique aimant permanent vrillé, ou en variante plusieurs. Par « aimant permanent vrillé », on entend qu'il existe un décalage angulaire entre chacune des deux extrémités longitudinales de l'aimant permanent.

L'aimant permanent correspondant peut être en un seul morceau.

Les aimants permanents peuvent par exemple être fabriqués par moulage. En variante, ils peuvent être usinés.

Le décalage angulaire entre chacune des deux extrémités longitudinales de l'aimant permanent peut être compris entre 1° et 5°, mieux entre 2,5° et 5°, voire entre 3° et 4,5°, mieux encore entre 3,2° et 4°, étant par exemple de 3,5°.

Dans une variante de réalisation, chaque pôle peut comporter une pluralité d'aimants permanents décalés angulairement les uns par rapport aux autres. Chaque pôle peut par exemple comporter deux aimant permanents décalés l'un par rapport à l'autre d'un angle donné.

Ainsi, le rotor peut comporter plusieurs rangées circonférentielles d'aimants permanents, par exemple deux rangées circonférentielles. Tous les aimants d'une même rangée circonférentielle peuvent être fixés à une même douille précitée.

Le rotor peut comporter une pluralité d'ensembles composés d'une douille et d'aimants permanents disposés en une rangée circonférentielle, par exemple deux ensembles, ou encore trois ou quatre ensembles. Tous les ensembles peuvent être identiques. La machine peut avantageusement n'être composée que d'un seul type d'ensembles, tous identiques, ce qui permet de réduire les coûts de fabrication.

En variante, une même douille peut porter plusieurs rangées circonférentielles d'aimants permanents.

Dans ce cas, les aimants permanents peuvent être droits, c'est-à-dire non vrillés, ou en variante ils peuvent être vrillés.

Dans un mode de réalisation, le rotor peut comporter au moins deux ensembles composés chacun d'une douille et d'aimants permanents fixés à la douille et disposés en une rangée circonférentielle, les deux ensembles étant disposés symétriquement l'un de l'autre par rapport à un plan transversal de la machine.

Une telle configuration peut permettre de produire le décalage angulaire, du fait du retournement d'un ensemble par rapport à l'autre.

Le décalage angulaire peut être obtenu par le fait qu'un ensemble peut comporter dans la douille des orifices de passage de tiges, afin de permettre le serrage de la ou des douilles autour de l'arbre de la machine. Lesdits orifices peuvent être placés de telle sorte que lorsqu'une douille est placée symétriquement par rapport à une autre douille, on obtient un décalage angulaire entre les aimants permanents qu'elles portent.

Les orifices peuvent être positionnés sous et au milieu de l'aimant. Ainsi, ces orifices n'interfèrent pas avec les lignes de champs de flux de l'aimant correspondant.

L'ensemble peut comporter deux orifices, décalés de sensiblement 180° entre eux. Ces deux orifices peuvent ne pas être exactement dans l'axe du milieu de l'aimant mais décalé d'un angle égal à la moitié du décalage angulaire, soit par exemple 0,625°.

Chaque douille peut être identique. C'est en retournant de 180° autour de l'axe X l'une des deux douilles que le décalage angulaire se créée entre les douilles.

Le décalage angulaire entre deux aimants consécutifs d'un même pôle peut être compris entre 0,8° et 2,5°, mieux entre 1° et 2°, voire entre 1,1° et 1,7°, mieux encore entre 1,20° et 1,5°, étant par exemple de 1,25°.

Un décalage angulaire entre le premier aimant et le dernier aimant d'un même pôle peut être compris entre 0,8° et 2,5°, mieux entre 1° et 2°, voire entre 1,1° et 1,7°, mieux encore entre 1,20° et 1,5°, étant par exemple de 1,25°.

Le choix d'un décalage angulaire d'angle assez faible peut être suffisant pour réduire les harmoniques de couple. En particulier, le choix de l'angle de décalage angulaire peut permettre de réduire l'harmonique 144. Cela est particulièrement avantageux dans la mesure où la présence d'aimants concaves peut entrainer une augmentation de cet harmonique 144.

Le choix d'un angle trop élevé pourrait risque d'entrainer une dégradation des performances de la machine.

Dans un mode de réalisation, le rotor peut comporter 16 pôles.

Dans un mode de réalisation, le rotor peut être intérieur. Dans ce cas, la face des aimants dirigée vers le stator correspond à la face des aimants opposée à un axe de rotation X de la machine.

En variante, le rotor peut être extérieur, ce qui peut lui permettre notamment de tourner à une vitesse relativement élevée en limitant le risque de détachement des aimants. Dans ce cas, la face des aimants dirigée vers le stator correspond à la face des aimants dirigée vers l'axe de rotation X de la machine.

Dans le cas d'un rotor extérieur, la concavité de la face dirigée vers le stator des aimants permanents du rotor est supérieure à une concavité seulement conférée par une forme cylindrique de la face, laquelle serait due à la disposition extérieure du rotor pour permettre le placement du stator à l'intérieur de celui-ci et de ménager un entrefer suffisant entre le rotor et le stator. Autrement dit, la concavité des faces dirigées vers le stator des aimants permanents du rotor est plus profonde qu'une surface cylindrique de révolution.

L'arbre du rotor peut être massif, étant par exemple creux ou plein.

En variante, il pourrait ne pas être massif, comportant par exemple un empilement de tôles feuilletées. Les tôles peuvent être recouvertes chacune d'un vernis isolant, afin de limiter les pertes par courant induit

Une face concave d'un aimant permanent du rotor peut comporter une portion concave. La largeur l de la portion concave, mesurée perpendiculairement à un rayon du rotor, peut être comprise entre 0,1π(D_{S}-2*d*)/P et 2π(D_{S}-2*d*)/P mm (millimètres),
Où Ds est le diamètre d'alésage du stator,
P le nombre de pôles du rotor, et
d l'entrefer simple, c'est-à-dire la plus petite largeur de l'entrefer.

La largeur l de la portion concave, mesurée perpendiculairement à un rayon du rotor, peut être comprise entre 2 et 56 mm, mieux entre 4 et 40 mm, voire entre 8 et 20 mm, encore mieux entre 8 et 12 mm.

Une largeur d'un aimant permanent du rotor mesuré perpendiculairement à l'axe de rotation est par exemple comprise entre 0, 1π(D_{S}-2*d*)/P et 2π(D_{S}-2*d*)/P mm (millimètres).

La largeur d'un aimant permanent du rotor mesuré perpendiculairement à l'axe de rotation est par exemple comprise entre 4 et 56 mm, mieux entre 6 et 50 mm, voire entre 8 et 40 mm, encore mieux entre 10 et 20 mm, étant par exemple de l'ordre de 19 mm.

La plus grande profondeur *p* de la concavité de la portion concave, mesurée selon un rayon du rotor, peut être comprise entre 0,01 mm et l'épaisseur h de l'aimant correspondant, notamment entre 0,05 et 3 mm.

La plus grande profondeur de la concavité de la portion concave, mesurée selon un rayon du rotor, peut être située au milieu de la face concave de l'aimant permanent correspondant. Un aimant permanent est de préférence symétrique par rapport à un plan le coupant en son milieu, ce plan passant par l'axe de rotation de la machine et un rayon du rotor. En variante, la plus grande profondeur de la concavité de la portion concave, mesurée selon un rayon du rotor, est située ailleurs qu'au milieu de la face concave de l'aimant permanent correspondant. Un aimant permanent peut ne pas être symétrique par rapport à un plan le coupant en son milieu.

La portion concave peut être en section une portion de cercle ou d'ellipse. Le rayon du cercle ou le grand axe de l'ellipse peut être compris par exemple compris entre 0,1 *h* ^{∗}, où *h* est l'épaisseur de l'aimant, et 100 *h* mm, notamment entre 4 et 56 mm, mieux entre 6 et 40 mm, étant par exemple de l'ordre de 13 mm.

La portion concave d'une face concave peut être disposée entre deux portions latérales planes. La présence de portions latérales planes sur la face de forme générale concave permet de bénéficier de l'avantage de la concavité pour la face des aimants orientée vers le stator, tout en ayant un entrefer suffisant entre le rotor et le stator.

La largeur d'une portion latérale plane mesurée perpendiculairement à un rayon du rotor est par exemple comprise entre 0 et la largeur L de l'aimant, mieux entre 0,75 et 7 mm, étant par exemple de l'ordre de 2 mm.

La portion concave peut constituer de 20 à 100% de la largeur totale de l'aimant correspondant, mieux entre 25 et 90%, voire entre 40 et 80%. Dans un mode de réalisation, la portion concave constitue 75% de la largeur totale de l'aimant correspondant. Dans un autre mode de réalisation, en l'absence de portion latérale plane, la portion concave constitue 100% de la largeur totale de l'aimant correspondant.

Les aimants permanents du rotor peuvent présenter, lorsque la machine est observée selon l'axe de rotation, une section transversale de forme allongée. En particulier, les aimants permanents du rotor peuvent présenter, lorsque la machine est observée selon l'axe de rotation du rotor, une section transversale de forme générale rectangulaire de grand côté orienté perpendiculairement à un rayon de la machine.

Les aimants permanents du rotor peuvent avoir une épaisseur h, mesurée selon un rayon du rotor, comprise entre 0,5 et 32 *d,* où *d* est la plus petite largeur de l'entrefer, notamment entre 1 et 20 mm, mieux entre 1,5 et 10 mm, voire entre 2 et 5 mm.

Un ratio *p*/*h* entre la plus grande profondeur de la concavité de la portion concave, mesurée selon un rayon du rotor, et l'épaisseur d'un aimant permanent est par exemple comprise entre 0,01 et 0,9, mieux entre 0,1 et 0,4.

Le rotor et le stator ménagent entre eux un entrefer. L'entrefer peut avoir une largeur, mesurée selon un rayon de la machine, comprise entre 0,5 et 3 mm, mieux entre 0,6 et 1.4 mm, étant par exemple de l'ordre de 0,9 mm. L'entrefer est de préférence supérieur à 5/10 mm, mieux supérieur à 7/10 mm, afin de permettre la rotation du rotor dans le ou autour du stator.

La largeur *d₀* de l'entrefer, mesurée selon un rayon passant par le milieu d'un aimant, peut être comprise entre 0,5 et 5 mm, mieux entre 0,75 et 3 mm, étant par exemple de l'ordre de 1,6 mm. L'entrefer peut être au plus large au milieu d'un aimant, pour la machine selon l'invention, dans la mesure où la concavité de la face concave de l'aimant y est la plus profonde.

L'alésage D_{R} du rotor, qui correspond au diamètre extérieur du rotor dans le cas d'un rotor intérieur, est par exemple compris entre 15 et 150 mm, mieux entre 20 et 120 mm, étant par exemple de l'ordre de 105 mm.

Les aimants peuvent être monolithiques ou non. Dans un mode de réalisation, un pôle du rotor est formé d'un aimant permanent d'un seul bloc. En variante, un pôle du rotor est formé de plusieurs aimants qui peuvent être disposés les uns à la suite des autres lorsque l'on se déplace le long de l'axe de rotation du rotor.

Les aimants permanents peuvent être réalisés en ferrites, en plasto-ferrites, en terres rares ou plasto-terres rares, ou AlNiCo.

Les aimants permanents peuvent être formés à partir d'une poudre, puis usinés.

L'induction rémanente dans les aimants permanents d'un pôle du rotor peut être comprise entre 0,2 Tesla et 1,8 Tesla, mieux entre 0,3 Tesla et 1,5 Tesla, étant par exemple de l'ordre de 1,2 Tesla.

Les aimants permanents du rotor comportent une face de fixation opposée à la face concave dirigée vers le stator. La face de fixation peut être plane. Une face plane peut faciliter l'installation des aimants sur la masse rotorique. En variante, la face de fixation pourrait être convexe, ce qui peut permettre d'améliorer les performances électromagnétiques de la machine. La convexité de la face de fixation peut être dirigée vers l'axe de rotation dans le cas d'un rotor intérieur, ou vers l'extérieur dans le cas d'un rotor extérieur, ce qui peut permettre d'améliorer les performances électromagnétiques de la machine.

Dans le cas d'une face plane, la face plane est orientée perpendiculairement au rayon passant par l'axe de rotation et coupant l'aimant correspondant à mi-longueur.

Les aimants permanents peuvent être fixés à la masse rotorique du rotor par collage, par exemple sur une surface cylindrique de la masse rotorique ou dans un logement prévu à cet effet à la surface de la masse rotorique. En variante, ils peuvent être sertis dans un logement correspondant de la masse rotorique. Le logement peut avoir une surface plane ou concave, en fonction de la forme de la face de fixation des aimants.

La masse rotorique et/ou l'arbre du rotor peuvent être réalisés par un empilage de tôles magnétiques.

### Stator

Le stator peut être à bobinage concentré. Le stator peut comporter des dents et des bobines disposées sur les dents. Le stator peut ainsi être bobiné sur dents, autrement dit à bobinage non réparti. En variante, le stator pourrait être à bobinage réparti.

Les dents du stator peuvent comporter des épanouissements polaires. En variante, les dents du stator pourraient être dépourvues d'épanouissements polaires.

L'ouverture des encoches du stator, mesurée circonférentiellement, entre les épanouissements polaires le cas échéant, est par exemple comprise entre
0,175 mm et π^{∗}D_{S} - N^{∗}L_{S} mm (millimètres),
où Ds est le diamètre d'alésage du stator,
N le nombre de dents du stator, et
Ls est la largeur des dents du stator,
par exemple inférieure à 8 mm, notamment entre 0,5 et 3 mm, étant par exemple de l'ordre de 1,5 mm.

Les dents du stator peuvent avoir des faces d'extrémités dirigées vers le rotor de forme concave, notamment dans le cas d'un rotor intérieur. En variante, dans le cas d'un rotor extérieur, les dents du stator peuvent avoir des faces d'extrémités dirigées vers le rotor de forme convexe.

Les faces d'extrémité des dents du stator peuvent être par exemple des portions de cylindre, qui peuvent avoir un rayon de courbure correspondant à la distance séparant le sommet des dents de l'axe de rotation X de la machine.

L'alésage Ds du stator, qui correspond au diamètre intérieur du stator dans le cas d'un stator extérieur, est par exemple compris entre 20 et 220 mm, mieux entre 25 et 160 mm, étant par exemple de l'ordre de 110 mm.

Les dents du stator forment une culasse du stator qui peut être d'un seul tenant, ou en variante qui peut être formée d'un chapelet de dents reliées entre elles par des ponts de matière, ou encore d'une pluralité de dents séparées. Dans tous les cas, le stator peut comporter une carcasse extérieure entourant la culasse.

Les dents du stator peuvent être réalisées avec un empilage de tôles magnétiques, recouvertes chacune d'un vernis isolant, afin de limiter les pertes par courant induit.

Dans un mode de réalisation, le stator peut comporter 18 dents.

Le stator peut ne pas comporter de décalage angulaire entre ses deux extrémités.

### Machine

La machine peut constituer un générateur ou un moteur.

La machine électrique tournante selon l'invention peut avoir un diamètre extérieur par exemple compris entre 40 et 280 mm, mieux entre 50 et 220 mm, étant par exemple de l'ordre de 185 mm. Le diamètre peut par exemple être inférieur ou égal à 240 mm, étant notamment compris ente 40 mm et 190 mm.

La puissance de la machine peut être comprise entre 0,1 et 15 kW, étant par exemple de l'ordre de 0,75 kW, cette valeur n'étant nullement limitative.

La machine peut comporter un seul rotor intérieur ou, en variante, un seul rotor extérieur, ou en variante encore un rotor intérieur et un rotor extérieur, disposés radialement de part et d'autre du stator et accouplés en rotation.

Le nombre d'encoches par pôle et par phase peut être entier ou fractionnaire.

Le nombre de pôles P au rotor est par exemple compris entre 4 et 40 et le nombre de dents S au stator est par exemple compris entre 6 et 48.

La machine peut ne pas être fermée.

L'invention a encore pour objet un robot comportant une machine électrique tournante telle que décrite plus haut pour sa motorisation.

### Brève description des dessins

L'invention pourra être mieux comprise à la lecture de la description détaillée qui va suivre, d'exemples de mise en oeuvre non limitatifs de celle-ci, et à l'examen du dessin annexé, sur lequel :
[Fig 1] La figure 1 est une vue schématique et partielle d'une machine électrique tournante conforme à l'invention.
[Fig la] La figure la est une vue en perspective, schématique et partielle, du rotor de la figure 1.
[Fig 2a] La figure 2a est une vue en coupe transversale d'un aimant permanent de la machine de la figure 1.
[Fig 2b] La figure 2b est une vue en coupe longitudinale d'un aimant permanent de la machine de la figure 1.
[Fig 3] la figure 3 est une vue analogue à la figure 1 d'une variante de réalisation.
[Fig 4] la figure 4 est une vue schématique et partielle d'une variante de réalisation.

### Description détaillée

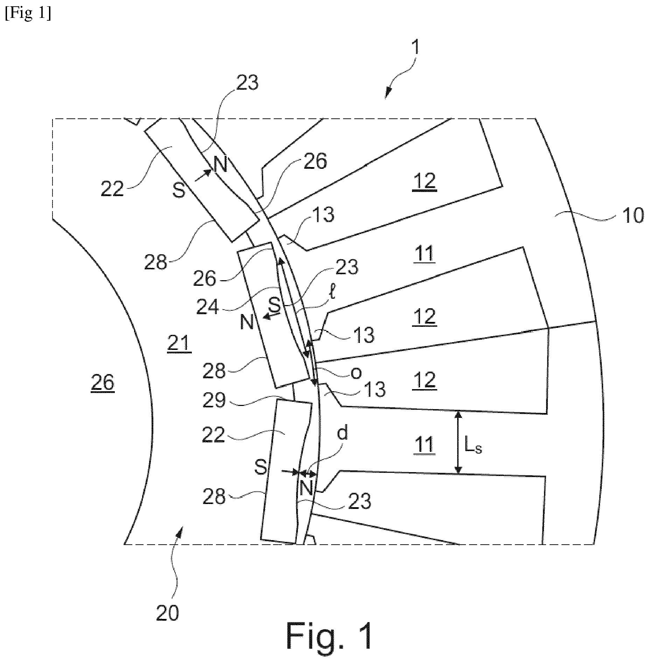

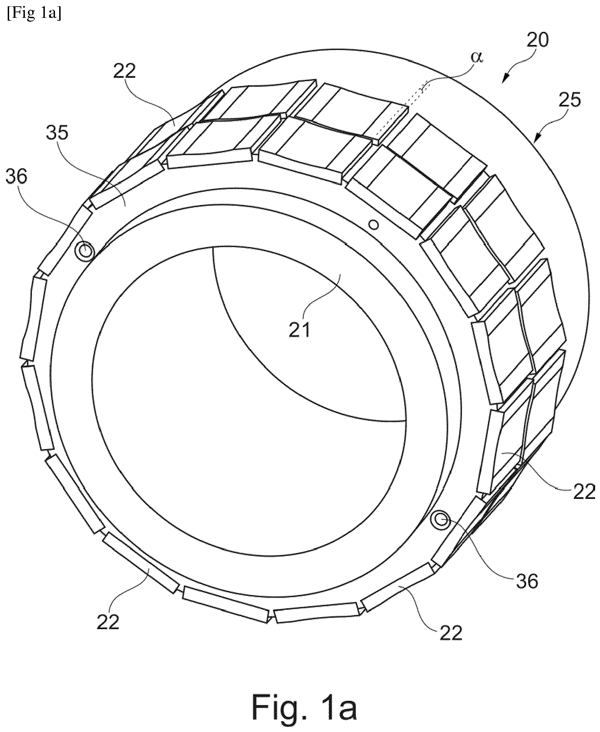

On a représenté aux figures 1 et la une machine électrique tournante 1 conforme à l'invention, comportant un stator 10 extérieur et un rotor 20 intérieur comportant une masse rotorique 25 comportant un arbre 21 et des aimants permanents 22 disposés en surface de la masse rotorique 25.

Le stator 10 est dans l'exemple décrit à bobinage concentré. Le stator 10 comporte des dents 11 portant chacune une bobine individuelle 12 disposée sur la dent correspondante. Les bobines 12 sont connectées électriquement entre elles de manière à être alimentées par un courant triphasé.

Les dents du stator comportent des épanouissements polaires 13. L'ouverture o des encoches du stator, mesurée circonférentiellement, entre les épanouissements polaires 13, est par exemple de l'ordre de 1,5 mm.

L'alésage du stator, qui correspond au diamètre intérieur du stator, est de l'ordre de 90 mm.

Le stator comporte encore une carcasse extérieure entourant la culasse, non représentée.

Au rotor, l'arbre 21 est massif, étant creux en son milieu, ménageant un espace 27.

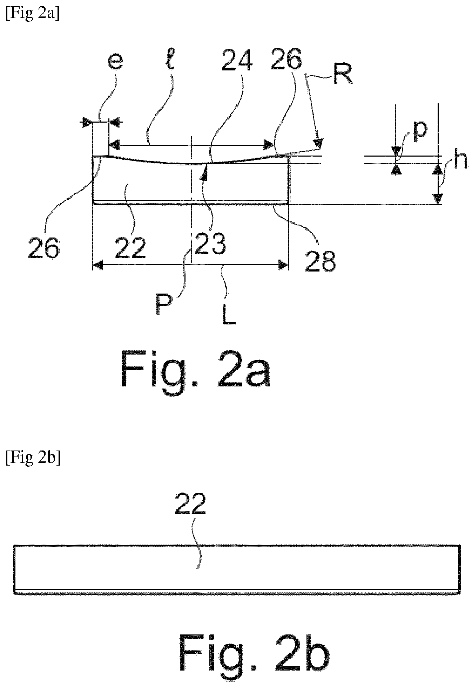

Conformément à l'invention, et comme illustré en détails aux figures 2a et 2b, les aimants permanents 22 du rotor comportent une face 23 dirigée vers le stator, qui est de forme générale concave. La face 23 des aimants dirigée vers le stator correspond à la face des aimants opposée à l'axe de rotation X de la machine.

La face concave 23 d'un aimant permanent 22 du rotor comporte une portion concave 24.

La largeur l de la portion concave 24, mesurée perpendiculairement à un rayon du rotor, en section, est de l'ordre de 9 mm, dans l'exemple décrit.

La largeur L d'un aimant permanent 22 du rotor mesuré perpendiculairement à l'axe de rotation, en section, est de l'ordre de 19 mm.

La plus grande profondeur *p* de la concavité de la portion concave, mesurée selon un rayon du rotor, en section, est de l'ordre de 0,5 mm.

La plus grande profondeur de la concavité de la portion concave, mesurée selon un rayon du rotor, est dans l'exemple décrit située au milieu de la face concave de l'aimant permanent correspondant. L'aimant permanent est symétrique par rapport à un plan P le coupant en son milieu, ce plan passant par l'axe de rotation de la machine et un rayon du rotor.

La portion concave 24 est dans l'exemple décrit en section une portion de cercle, de rayon R de l'ordre de 20 mm.

La portion concave 24 de la face concave 23 est disposée entre deux portions latérales planes 26.

La largeur *e* d'une portion latérale plane mesurée perpendiculairement à un rayon du rotor, en section, est de l'ordre de 2 mm.

La portion concave constitue dans l'exemple décrit environ 75 % de la largeur totale de l'aimant correspondant.

Les aimants permanents du rotor présentent, lorsque la machine est observée selon l'axe de rotation, une section transversale de forme générale rectangulaire, de grand côté orienté perpendiculairement à un rayon de la machine.

Les aimants permanents 22 du rotor ont une épaisseur *h*, mesurée selon un rayon du rotor, en section, de l'ordre de 3 mm.

Un ratio *plh* entre la plus grande profondeur *p* de la concavité de la portion concave, mesurée selon un rayon du rotor, et l'épaisseur *h* de l'aimant permanent 22 est de l'ordre de 0,2.

Le rotor et le stator ménagent entre eux un entrefer 30. L'entrefer a une largeur, mesurée selon un rayon de la machine, en section, de l'ordre de 0,9 mm. La largeur *d₀* de l'entrefer, mesurée selon un rayon passant par le milieu d'un aimant 22, en section, est de l'ordre de 1,5 mm.

L'alésage du rotor, qui correspond au diamètre extérieur du rotor, est de l'ordre de 50 mm.

Les aimants permanents 22 du rotor comportent une face de fixation 28 opposée à la face concave 23 dirigée vers le stator, qui est dans l'exemple décrit de forme plane. La face plane est orientée perpendiculairement au rayon passant par l'axe de rotation et coupant l'aimant correspondant 22 à mi-longueur.

Les aimants permanents 22 sont fixés à la masse rotorique 25 par collage dans un logement 29 prévu à cet effet à la surface de celle-ci. Le logement 29 a une surface plane correspondant à la forme de la face de fixation des aimants.

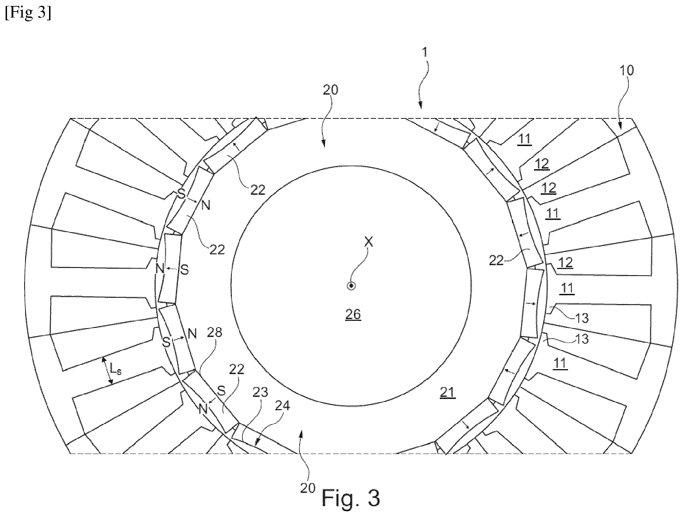

La face concave 23 peut comporter une ou des portions concaves 24 et une ou des portions planes 26, comme illustré précédemment, ou être entièrement concave, comme on l'a illustré à titre d'exemple à la figure 3.

Dans cet exemple, en l'absence de portion latérale plane, la portion concave 24 constitue 100% de la largeur totale de l'aimant correspondant.

Conformément à l'invention, et comme visible sur la figure la, les aimants permanents 22 du rotor 20 forment des pôles du rotor. Les aimants permanents d'un même pôle ont un décalage angulaire α entre deux extrémités longitudinales de la machine, comme illustré sur la figure la.

Dans l'exemple décrit, la masse rotorique comporte une douille 35 sur laquelle sont fixés les aimants permanents, par exemple par collage. La ou les douilles 35 peuvent être fixées, par exemple par collage, à l'arbre 21 de la machine, lequel peut être lisse.

La douille 35 peut être formée d'un empilement de tôles. La douille 35 peut être unique, portant tous les aimants permanents du rotor. En variante, la masse rotorique peut comporter plusieurs douilles.

Par ailleurs, chaque pôle du rotor comporte deux aimants permanents 22 décalés angulairement l'un par rapport à l'autre d'un angle donné. Les aimants permanents sont droits, c'est-à-dire non vrillés,

Le décalage angulaire α entre deux aimants consécutifs d'un même pôle est dans l'exemple décrit de 1,25°. En outre, un décalage angulaire entre le premier aimant et le dernier aimant d'un même pôle est dans cet exemple de 1,25°.

Ainsi, le rotor comporte plusieurs rangées circonférentielles d'aimants permanents 22, à savoir deux dans cet exemple. Tous les aimants permanents 22 d'une même rangée circonférentielle sont fixés à une même douille précitée 35.

Le rotor comporter donc deux ensembles composés chacun d'une douille 35 et d'aimants permanents 22 disposés en une rangée circonférentielle. Les deux ensembles peuvent être identiques.

Dans l'exemple décrit, ils sont tous deux disposés symétriquement l'un de l'autre par rapport à un plan transversal de la machine. Une telle configuration permet de produire le décalage angulaire, du fait du retournement d'un ensemble par rapport à l'autre.

A cet effet, la douille 35 comporte deux orifices 36 de passage de tiges, afin de permettre le serrage de la ou des douilles 35 autour de l'arbre 21 de la machine. Lesdits orifices 36 sont placés de telle sorte que lorsqu'une douille 35 est placée symétriquement par rapport à une autre douille 35, on obtient un décalage angulaire entre les aimants permanents 22 qu'elles portent.

Les orifices 36 sont positionnés sous et au milieu de l'aimant. Ils sont décalés de sensiblement 180° entre eux. Ces deux orifices 36 ne sont pas exactement dans l'axe du milieu de l'aimant mais décalé d'un angle égal à la moitié du décalage angulaire, soit par exemple 0,625°. Chaque douille étant identique, c'est en retournant de 180° autour de l'axe X l'une des deux douilles que le décalage angulaire se créée entre les douilles.

En variante, il est également possible de fretter les douilles sans collage. Le frettage consiste à chauffer une douille avec un diamètre intérieur très serré pour la dilater et l'emmancher sur l'arbre. Une autre possibilité est d'usiner directement sur l'arbre les logements des aimants.

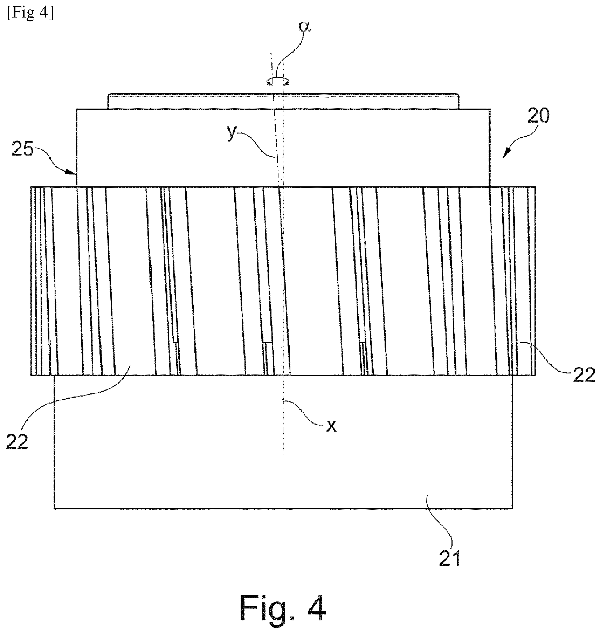

Dans une variante de réalisation illustrée à la figure 4, chaque pôle peut comporter un aimant permanent 22 vrillé, s'étendant selon un axe longitudinal Y incliné d'un angle α par rapport à l'axe X de la machine. Dans cet exemple, chaque pôle comporte un unique aimant vrillé, mais en variante il pourrait en comporter plusieurs.

Ainsi, il existe un décalage angulaire α entre chacune des deux extrémités longitudinales de l'aimant permanent 22. Le décalage angulaire α entre chacune des deux extrémités longitudinales de chaque aimant permanent 22 est par exemple de 2,5°.

Dans les exemples considérés, le rotor comporte 16 pôles et le stator 18 dents. On ne sort pas du cadre de la présente invention si leur nombre est différent.

L'invention n'est pas limitée aux exemples de réalisation qui viennent d'être décrits, et le rotor peut par exemple comporter un nombre de pôles différent, de même que pour les dents du stator.

En outre, dans l'exemple décrit, le rotor est intérieur, mais on ne sort pas du cadre de la présente invention si le rotor est extérieur, ou si la machine comporte à la fois un rotor intérieur et un rotor extérieur disposés chacun radialement de part et d'autre du stator et accouplés en rotation.

La machine peut être utilisée non seulement en moteur mais également en générateur, pour effectuer une récupération d'énergie, par exemple.

La machine selon l'invention peut trouver des applications autres que la motorisation de robots.

## Revendications

1. Machine électrique tournante (1) comportant :
- un stator (10), et
- un rotor (20) comportant une masse rotorique (25) et des aimants permanents (22) disposés en surface de la masse rotorique, les aimants permanents (22) comportant une face dirigée vers le stator de forme générale concave,
les aimants permanents (22) du rotor formant des pôles du rotor, le ou les aimants permanents (22) d'un même pôle ayant un décalage angulaire (a) entre deux extrémités longitudinales de la machine.

2. Machine électrique selon la revendication précédente, la masse rotorique (25) comportant une douille (35) sur laquelle sont fixés les aimants permanents (22), notamment par collage.

3. Machine selon l'une des revendications précédentes, chaque pôle comportant au moins un aimant permanent (22) vrillé.

4. Machine selon la revendication précédente, le décalage angulaire (a) entre chacune des deux extrémités longitudinales de l'aimant permanent (22) étant compris entre 1° et 5°, mieux entre 2,5° et 5°, voire entre 3° et 4,5°, mieux encore entre 3,2° et 4°.

5. Machine électrique selon l'une des revendications 1 ou 2, chaque pôle comportant une pluralité d'aimants permanents (22) décalés angulairement les uns par rapport aux autres.

6. Machine selon la revendication précédente, le rotor (20) comportant au moins deux ensembles composés d'une douille (35) et d'aimants permanents (22) fixés à la douille (35) et disposés en une rangée circonférentielle, les deux ensembles étant disposés symétriquement l'un de l'autre par rapport à un plan transversal de la machine.

7. Machine selon l'une des deux revendications précédentes, le décalage angulaire (a) entre deux aimants permanents (22) consécutifs d'un même pôle étant compris entre 0,8° et 2,5°, mieux entre 1° et 2°, voire entre 1,1° et 1,7°, mieux encore entre 1,20° et 1,5°.

8. Machine selon l'une quelconque des revendications précédentes, le rotor (20) comportant 16 pôles, le rotor (20) étant notamment intérieur.

9. Machine selon l'une quelconque des revendications précédentes, dans laquelle une face concave (23) d'un aimant permanent du rotor comporte une portion concave (24), de largeur (1) mesurée perpendiculairement à un rayon du rotor comprise entre 2 et 56 mm, mieux entre 8 et 12 mm, la plus grande profondeur (p) de la concavité de la portion concave (24), mesurée selon un rayon du rotor, étant notamment comprise entre 0,05 et 3 mm.

10. Machine selon l'une des deux revendications précédentes, la portion concave (24) étant en section une portion de cercle ou d'ellipse.

11. Machine selon l'une des trois revendications précédentes, la portion concave (24) d'une face concave étant disposée entre deux portions latérales planes (26).

12. Machine selon l'une quelconque des revendications précédentes, les aimants permanents (22) du rotor ayant une épaisseur (h), mesurée selon un rayon du rotor, comprise entre 1,5 et 10 mm, mieux entre 2 et 5 mm.

13. Machine selon l'une quelconque des revendications précédentes, un ratio (p/h) entre la plus grande profondeur de la concavité de la portion concave (24), mesurée selon un rayon du rotor, et l'épaisseur d'un aimant permanent (22) étant comprise entre 0,01 et 0,9, mieux entre 0,1 et 0,4.

14. Machine selon l'une quelconque des revendications précédentes, les aimants permanents (22) étant fixés à la masse rotorique du rotor par collage, notamment sur une surface cylindrique de la masse rotorique ou dans un logement (29) prévu à cet effet à la surface de la masse rotorique.

15. Machine selon l'une quelconque des revendications précédentes, les aimants permanents (22) comportant une face de fixation (28) opposée à la face concave dirigée vers le stator qui est plane, le stator (10) étant notamment à bobinage concentré, comportant notamment des dents (11) et des bobines (12) disposées sur les dents.
